# EUROPEAN PATENT SPECIFICATION

(11) **EP 1 873 161 B1**
(45) Date of publication and mention of the grant of the patent: **16.09.2009**
(21) Application number: 06425451.9
(22) Date of filing: 30.06.2006
(51) Int. Cl.: C07F 9/6571, G01N 5/00

(54) **Tetraphosphonate cavitands as molecular receptors in mass sensors for gases and method for determining phosphine by using said sensors**
Tetraphosphonat-Cavitanden als molekulare Rezeptoren in Massensensoren für Gase und Verfahren zur Bestimmung von Phosphin unter Verwendung dieser Sensoren
Cavitandes de tetraphosphonate en tant que récepteurs moléculaires dans des détecteurs de masse de gaz et procédé de détection de phosphine en utilisant ces détecteurs

(43) Date of publication of application: 02.01.2008
(73) Proprietor: Barilla G. e R. Fratelli S.p.A., 43100 Parma (IT)
(72) Inventor: Torella, Stefania, I-71100 Foggia (IT); Dalcanale, Enrico, I-43100 Parma (IT); Longobardi, Francesco, I-70021 Acquaviva delle Fonti(Bari) (IT); Visconti, Angelo, I-70126 Bari (IT); Suman, Michele, I-43058 Sorbolo(Parma) (IT); Ranieri, Roberto, I-43052 Colorno(Parma) (IT)
(74) Representative: Ferreccio, Rinaldo

(56) References cited:
- C A BROCKWELL: "Determination of Phosphine in Wheat by Headspace Gas-Liquid Chromatography" J. AGRIC. FOOD CHEM., vol. 26, no. 4, 1978, pages 962-964, XP002406912
- J W FLORA ET AL: "Residue Formation of Phosphorous Hydride Polymers and Phosphorus Oxyacids during Phosphine Gas Fumigation of Stored Products" J. AGRIC. FOOD CHEM., vol. 54, 2006, pages 107-111, XP002406913
- PINALLI, ROBERTA ET AL: "Cavitands at work: From molecular recognition to supramolecular sensors" EUROPEAN JOURNAL OF ORGANIC CHEMISTRY , (3), 451-462 CODEN: EJOCFK; ISSN: 1434-193X, 2004, XP002406914

## Description

The present invention refers to the field of methods for analyzing gases and aeriform phases.

In particular the invention concerns a method for determining phosphine in gases or also in gaseous phases that contain it following its deadsorption from solid matrices.

In a particular aspect thereof, the invention concerns a method for determining phosphine contained in caryopses of cereals following treatment of the latter with gaseous phosphine inside silos.

Said method foresees the use of chemical sensors, consisting of the combination of a sensitive element, capable of specifically recognizing the analyte of interest, and a transduction element, which converts the signal deriving from the chemical interaction between the sensitive element and the analyte into a measurable electrical signal.

In the case of the present method, the transduction element is a quartz crystal microbalance (QCM) and the sensitive element is an organic compound generally known as phosphonate cavitand, which forms a coating film of the quartz discs of the microbalance.

In a further aspect thereof, the invention refers to new compounds, known as cavitands, which can be used as sensitive elements of chemical sensors for phosphine.

### Prior art

Phosphine is a toxic colorless gas that is extremely volatile and has a characteristic smell of rotten fish, but noticeable at concentrations that are already considered harmful.

It decomposes in air within about 24 hours; at high concentrations it bums spontaneously giving off toxic vapors of P₂O₃ and P₂O₅. The threshold limit value for a working day (the so-called TLV -TWA Threshold Limit Value - Time Weighted Average) is equal to 0.3 ppm (m/m); the lethal dose for 50% of the population worked out by experiments on rats (the so-called LD₅₀) is equal to 11 ppm; in general a concentration in air of over 8 ppm normally causes vomiting and nausea whereas when it exceeds the threshold of 200 ppm it can be considered lethal (Immediately Dangerous to Life and Health - US EPA 1985).

This gas is widely used as a fumigant in storage silos for foodstuffs, such as cereals and tobacco, but it is often also present as an impurity in combustion gas, like for example acetylene. In this last case it is important to have a quick and reliable method for determining the amount of impurity, since for certain particular uses, like for example in the production of blown glass, the presence of phosphine in the acetylene over a certain threshold results in the development of undesired coloring in the glass.

In the field of parasite and mould control inside grain storage silos, phosphine (PH₃) is frequently used as a suitable fumigant.

In general, fumigation with PH₃ is carried out in silos respecting the following conditions:
- the temperature is between 10 and 30°C (the silos are the same temperature as outside because they are not thermostated)
- the humidity of the grain usually does not exceed 12% (indeed, this is the typical humidity value of mature caryopses).

Treatments with phosphine in gas phase (J-system) are always effective. They can be carried out from a separate outer development tank or through simple circulation of the gas released from tablets in the top part of the silos. However such treatments are complex and require the use of onerous safety infrastructures.

For this reason, as an alternative, a chemical precursor, aluminum and/or magnesium phosphide (in the form of pellets) is often used, which with the ambient moisture determines the gradual and progressive release of phosphine over time. Since the reaction does not have 100% yield, a small percentage of non-hydrolyzed phosphide residues remains.

For this reason, treatments with phosphine pellets can generate values that lie beyond the law limits in some points of the production line: if the silos are kept hermetically sealed, after 28 days it is still possible to detect traces of PH₃ (< 1 ppm); vice-versa, if they are aerated and/or moved for 48 hours, all residue should disappear completely (< 0.02 ppm). The exposure time before the silos can be opened at all is usually equal to at least 7 days.

The maximum residue limit from the Codex Alimentarius (FAO/WHO, 1993, Vol. 2, Pesticide residues in food, 2nd ed. Joint Food & Agriculture Organization of the United Nations/World Health Organization Food Standards Programme, Rome) is 0.1 mg of phosphine per 1 kg of grain corresponding to 0.1 ppm (m/m).

To determine phosphine, for example in food matrices like wheat, there is a well-established known method that is now applied by most analysis laboratories, i.e., the gas chromatographic analysis or liquid-gas chromatography with the use of a specific phosphorus detector (T.W. Nowicki, J. Assoc. Anal. Chem., 1978, vol. 81, 4, 829-836, C.A. Brockwell, J. Agri. Food Chem., 1978, vol. 26, 4, 962-964). Such analysis involves a treatment of the matrix to develop an adequate head space for a quantitative analysis of all of the gas present in free gas form above the sample and the gas adsorbed on the wheat caryopsis (B. Berck, J. Agr. Food Chem., 1968, vol. 16, 3, 419-425, S. Pratt, J.M. Desmarchelier, Paper presented at Australian Postharvest Technical Conference, 1998, 110-115). The most effective treatment foresees the steps of digesting the sample with an acidic solution and heating under reflux and a vacuum system to convey the gas developed in a second flask from which it is then taken for chromatographic analysis. Many other studies have been carried out to modify this treatment (S.E. Allen, Y.L. Ren, J.M. Desmarchelier, J AOAC Intern, 1998, vol. 81, 3, 633-637).

Other systems have also been studied like electrochemical sensors in solid state and photoionization detectors (G. L. Weller, S. Pratt, Proceedings of the Australian Postharvest Technical Conference, 2003, 183-187), but they proved to be not sensitive and selective enough with regard to the analyte or subject to interference from other substances present in the samples.

Analyses have also been carried out with more modem instruments like FT-IR, X-ray fluorescence and SEM, to determine phosphorus hydride polymers that are generated in critical conditions after the fumigation of tobacco leaves (J. W. Flora, L. E. Byers, S. E. Plunkett, D. L. Faustini, J. Agri. Food Chem., 2006, 54, 107-111), but such systems do not lend themselves to quantitative analysis.

On the other hand, mass sensors are specially designed to recognize molecules by analyte-receptor interactions of the hydrogen bond or alkyl π-chain type. Such sensors have been obtained using cavitands having phenylphosphonate bridges at the top edge (see R. Pinalli, M. Suman, E. Dalcanale Eur. J. Org. Chem. 2004, 451-462). Cavitands are also known having the general formula Tiiii[R, R₁, R₂] or Mx[R, R₁, R₂]. General structure of tetraphosphonate cavitands Tiiii[R, R₁, R₂].

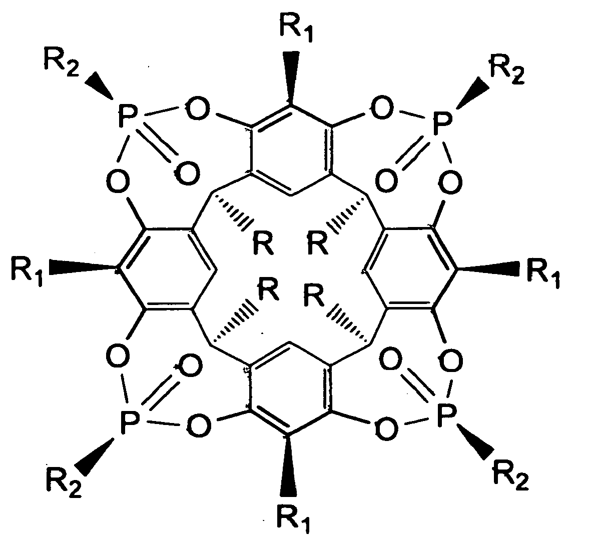

General structure of monophosphonate cavitands Mx[R, R₁, R₂] .

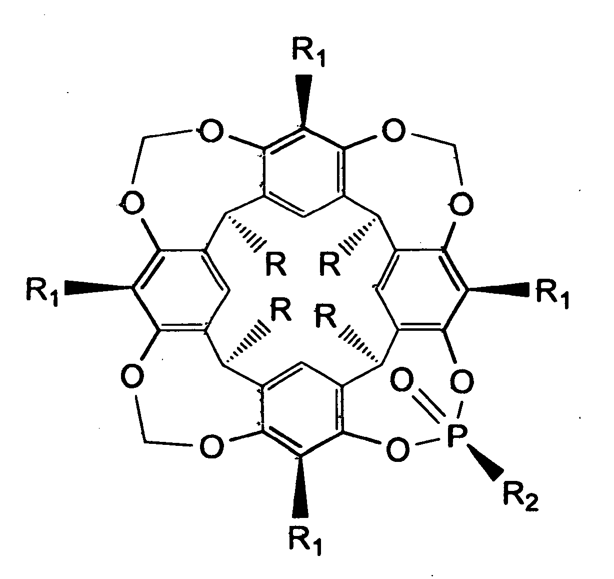

The compounds of general formula Tiiii[R, R₁, R₂] having R₂= phenyl, known as phosphonate cavitands, have been described, for example, in the following publications: P. Delangle, J-P. Dutasta Tetrahedron Lett. 1995, 36, 9325-9328; P. Jacopozzi, E. Dalcanale, S. Spera, L.A.J. Chrisstoffels, D.N. Reinhoudt, T. Lippmann, G. Mann J. Chem. Soc Perkin Trans. 2 1998, 671-677; P. Delangle, J-C. Mulatier, B. Tinant, J-P. Declercq, J-P. Dutasta Eur J. Org. Chem. 2001, 3695-3704. Said cavitands are obtained through an acid-catalyzed condensation between an aldehyde and resorcinol to give a resorcinarene (see for example L.M. Tunstad, J.A. Tucker, E. Dalcanale, J. Weiser, J.A. Bryant, J.C. Sherman, R.C. Hegelson, C.B. Knobler, D.J. Cram J. Org. Chem. 1989, 54, 1305-1312), followed by bridging of the 8 phenolic OH with phosphonate groups using dichlorophenylphosphonate as reagent. From such a reaction it is theoretically possible to obtain six different structural isomers having all possible orientations of the PO groups with respect to the cavity, i.e. inwards (i) or outwards (o), as described in J. Chem. Soc Perkin Trans. 2 1998, 671-677.

As for cavitands having R₂ alkyl groups, just two of them have been reported in literature (those having respectively groups R = Me and R = Pr with R₂ = Me for both) in the publication: T.K. Sinitsyna, V.I. Maslennikova, L.K. Vasayanina, M.V. Dyagileva, E.E. Nifant'ev Russ. J. Gen. Chem. 2000, 70, 715-719. The synthetic way used to obtain them is different from the one which is reported here and the stereoselectivity of the reaction, i.e. how many and which isomers were formed, is not specified.

From Italian patent application No. PR2004A000051, filed on 20/07/2004, phosphonate cavitands of general formula Tiiii[R, R₁, R₂] are known, in which R = H or C₄-C₂₂ alkyl, aryl or heteroaryl, R₁ = F, Cl, Br, I or C₁-C₃ alkyl and R₂ = C₁-C₂₂ alkyl. Such phosphonate cavitands are used as sensitive materials in selective mass sensors for alcohols, thiols, hydrogen sulphide and carboxylic acids.

### Summary of the invention

A purpose of the present invention is to provide phosphonate cavitands that can be used as sensitive materials in selective mass sensors for phosphine.

Another purpose of the present invention is to provide a method for determining phosphine present within gaseous phases, by using said phosphonate cavitands.

A further purpose of the invention is to provide a method for determining phosphine possibly contained in samples of caryopses of cereals, by using said phosphonate cavitands.

The aforementioned purposes are accomplished by providing new compounds having the following formula (I) 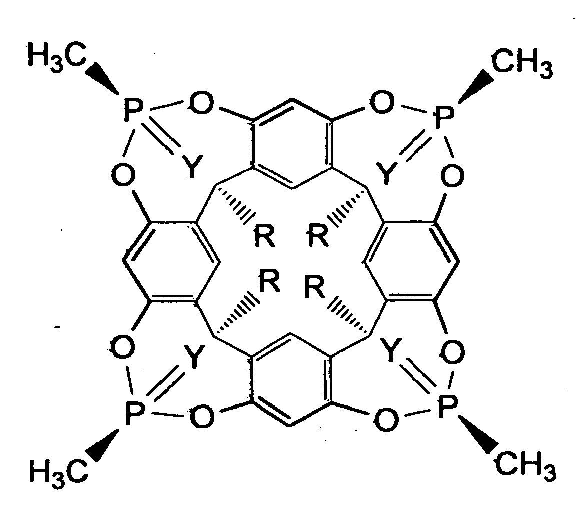 in which Y = O or S and R = C₄-C₁₈linear or branched alkyl.

Particularly preferred compounds are those having formula (I) in which R = C₁₁H₂₃.

With such compounds selective mass sensors for phosphine can be made that can be used in determining phosphine in gaseous phases, like for example in acetylene.

The invention also concerns the use of a compound having formula (II) 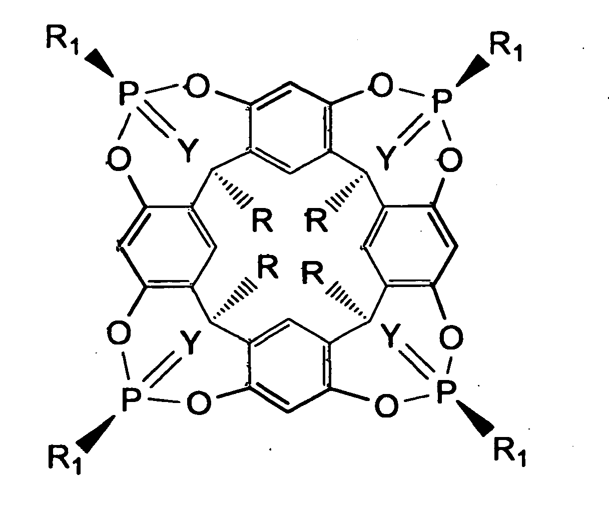 in which Y = O or S; R = C₄-C₁₈ linear or branched alkyl and R₁ = methyl or optionally substituted phenyl, as sensitive material in selective mass sensors for phosphine.

It is preferred to use compounds of formula (II), in which R = C₁₁H₂₃ and R₁ = methyl or phenyl and in particular those in which Y = O.

The invention also concerns a method for determining phosphine possibly present in caryopses of cereals, which comprises the steps of:
a) adding an aqueous solution of H₂SO₄ with a v/v concentration of between 5 and 20% to a sample of said caryopses of cereals contained in a hermetically sealed container, obtaining an aqueous dispersion,
b) subjecting the aqueous dispersion to the action of microwaves for a time no longer than 3 minutes;
c) taking the gaseous phase above the aqueous dispersion in contact with a selective piezoelectric transducer for phosphine, consisting of a quartz crystal microbalance, having at least one mass sensor comprising a quartz disc coated with a layer of a phosphonate cavitand according to formula (II) and
d) determining phosphine based upon the variation in frequency recorded by the microbalance.

Preferably, two mass sensors are used, one of which has a phosphonate cavitand of formula (II) wherein Y = O as sensitive material and the other one has a phosphonate cavitand of formula (II) wherein Y = S as sensitive material.

### Brief description of the figures

The present invention will be further described with reference to the attached figures, in which:
Fig. 1 is a diagram that shows the responses of the quartz crystal microbalances at 20°C at different concentrations of gaseous phosphine;
Fig. 2 is a diagram that shows the responses of receptors comprising compounds according to the present invention at pellet-generated phosphine concentrations increasing from 0.128 to 1.281 ppm (m/m) calculated.
Fig. 3 schematically represents an apparatus used to carry out the method according to the present invention;
Fig. 4 is a diagram that shows the responses of different sensors to selected samples of wheat with suitable phosphine concentrations.

### Detailed description of the invention

The operating principle of the mass sensors comprising phosphonate cavitands according to the present invention as sensitive materials is based upon a decrease in the vibration frequency of the quartz, due to the temporary interaction, through hydrogen bonds, of the analyte, PH₃, with the phosphonate groups (P=O) with which the receptors present on the quartz, i.e. the cavitands, are functionalized. Following such an interaction, the mass of sensitive material deposited on the quartz crystals increases.

In particular, the receptors used for our analyses to determine phosphine are four resorcinarene-based macrocyclic structures functionalized with phosphonate groups P=O and P=S orientated inwards with respect to the preorganized cavity.

The compound of formula (I) in which Y=O and R = C₁₁H₂₃ was prepared in the following way.

208 µL (2.0 mmol) of N-methylpyrrolidine and 688 µL (7.6 mmol) of Cl₂POCH₃ (dichloromethyl phosphonate) are added to a suspension of C-undecyl resorcinarene (2g, 1.8 mmol) in 100 mL of anhydrous toluene. After a few minutes of heating the solution becomes clear and homogeneous. The reaction is kept under stirring at 112° for 5 hours, brought to dryness, and the resulting crude product is sonicated in water for about 1 hour. The solid thus obtained is purified firstly through pads of silica gel (eluent CH₂Cl₂/MeOH 9/1) then by cold recrystallization with CH₂Cl₂/ THF / ethyl ether to give the above compound, pure with 10% yield.
¹H NMR: (CDCl₃, 300MHz): δ 7.14 (s, 4H, ArH), 6.83 (s, 4H, ArH), 4.56 (t, CH-CH₂, J = 6.3 Hz), 2.23 (m, 8H, CH-CH₂), 1.82 (d, 12H, CH₃POᵢₙ, J_{H-P} = 18.3 Hz), 1.25 (m, 72H, (CH₂)₉), 0.87 (t, 12H, CH₃- CH₂).
³¹P NMR: (CDCl₃, 162MHz): δ 18.8 (q, 1P, J_{H-P} = 18.3 Hz)
MS (ESI, m/z): 1447 [100%, [M+NHEt₃]⁺, calculated 1447.8]

The compound having formula (I) in which Y = S and R = C₁₁H₂₃ was prepared in the following way.

1.11 mL (12.6 mmol) of Cl₂PCH₃ (dichloromethyl phosphine) is added to a suspension of C-undecyl resorcinarene (4g, 3.6 mmol) in 50 mL of anhydrous pyridine and 100 mL of anhydrous DMA. The reaction is kept under stirring at 60° for 4 hours. 0.69 g (21.6 mmol) of anhydrous granular sulphur is added. The reaction is left under stirring for about 34 hours at 60°C. Then the mixture is brought to dryness, and the resulting crude product is dissolved in CH₂Cl₂ and purified firstly through pads of silica gel (eluent CH₂Cl₂) then with a column (eluent CH₂Cl₂) to give the aforementioned compound, pure with 50% yield.
¹H NMR: (CDCl₃, 300MHz): δ 7.13 (s, 4H, ArH), 6.54 (s, 4H, ArH), 4.51 (t, CH-CH₂, J = 7.02 Hz), 2.22 (d, 8H, CH-CH₂, J = 6.15 Hz), 2.14 (d, 12H, CH₃PSᵢₙ, J_{H-P} = 15.9 Hz), 1.37 (m, 72H, (CH₂)₉), 0.88 (t, 12H, CH₃-CH₂ J = 6.43 Hz).
³¹P NMR: (CDCl₃, 162MHz): δ 87.78 (q, 1P, J_{H-P} = 16.0 Hz)

MS (ESI, m/z): 1518 [12%, [M+N-methylpicoline]⁺, calculated 1516.73].

The deposition of the receptors on the quartz crystals can be carried out in two ways: by spray coating or by spin coating.

Both types of deposition involve the preparation of a solution 10⁻² M of one of the receptors dissolved in methylene chloride or chloroform.

The first way, spray coating, consists of nebulizing the solution through an ordinary spray gun. As the gas carrier chromatographic air is used at a pressure of about 1 atm. The air gun is arranged a distance of about 10 cm from the quartz for uniform distribution.

The frequency of the quartz is constantly monitored during the deposition step since the quartz is kept vertical on a base that contains the electronic terminals of a frequency meter.

Spin coating, on the other hand, consists of the deposition of a few drops of solution on the surface of the quartz. Then the housing of the spin coater is closed, a vacuum is applied and then a number of spins are carried out such as to ensure uniform distribution of the receptor on the quartz surface.

The quartz in this case is kept still on a specially built disc. The amount of receptor deposited is then measured with a frequency meter.

All of the receptors used for the study and the applications of phosphine were deposited by spray coating and for each quartz an amount of receptor equal to a decrease in the base oscillation frequency of 20 KHz was deposited, 10 for each face.

The selectivity of the compounds according to the present invention in which Y = O increases according to the geometry and number of substituents P=O present in the macrocycle: the presence of 4 PO groups originally promotes the formation of the hydrogen bond in terms of probability, greatly increasing the overall response of the sensor. Finally, the fact that the aryl groups in the known molecules have been substituted with alkyl groups on the phosphorus makes the PO group a better acceptor of hydrogen bond, further increasing the specific responses of the respective sensors.

Moreover, the response of compounds having formula (II) with Y = O in comparison with that of compounds having formula (II) with Y = S and of a generic polymer, PECH (polyepichlorohydrin), normally used in sensors as a further reference (PECH only absorbs analytes according to their relative polarity - R.A. McGill, M.H. Abraham, J.W. Grate CHEMTECH 1994, 27-37), was also evaluated.

In literature (D. Reyntjens-Van Damme, T. Zeegers-Huyskens, J. Phys. Chem. 1980, 84, 282-285) it is shown how, through a study of the thermodynamic and spectroscopic properties of the hydrogen bond in complexes between phenolic and triethylthiophosphate derivatives in carbon tetrachloride, such a hydrogen bond can be considered much weaker than the corresponding oxygen-based one.

The efficiency of the receptors has been tested on cylinders of PH₃ diluted in nitrogen to values even below the corresponding law limit.

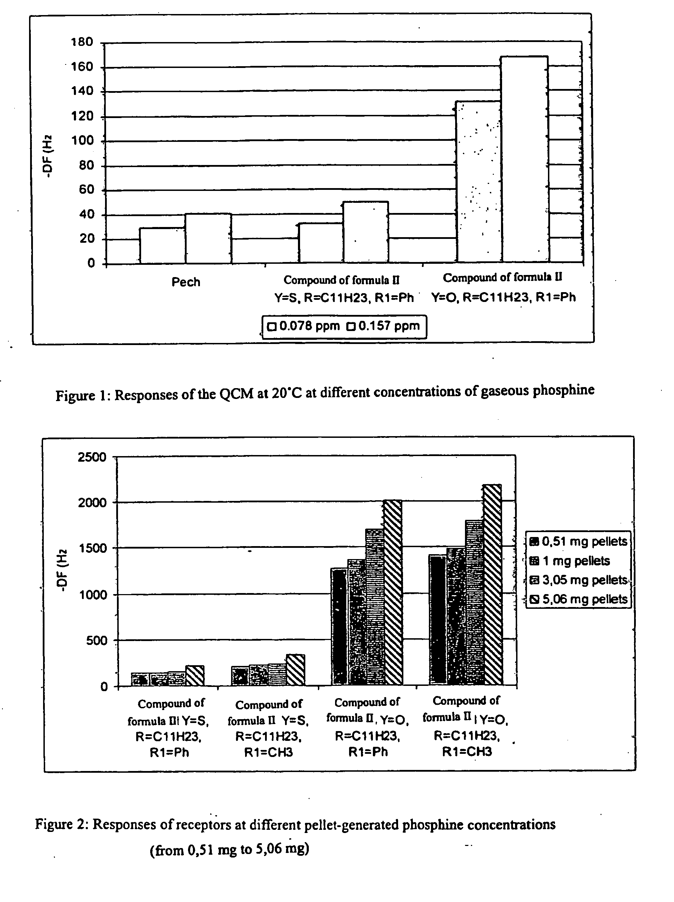

Figure 1 shows the tests for analyzing the responses of the receptors to gaseous phosphine at respective concentrations of 56 and 112 ppm (v/v) respectively corresponding to 0.078 and 0.158 ppm (m/m).

This first set of measurements was also used to outline the best analysis temperature conditions (20°C) and to outline a pattern of sensors to be used. From such preliminary tests it emerged that as the concentration increases the expected increase in response occurs and also that the best receptor is the compound having formula (II) in which Y = O, R = C₁₁H₂₃ and R₁ = CH₃ (figure 2).

It should be observed that the gas, PH₃, used in these tests tends to make the lines in which it passes very dirty and is very unstable in air. This causes substantial variations in the responses of the instrument in the tests carried out afterwards. Therefore, it was then decided to generate the phosphine from AIP and Mg₃P₂ pellets in a similar way to the procedure carried out by the specialized laboratories that carry out the chemical analyses of PH₃ in wheat, according to the conventional gas chromatography technique.

The control analyses on the food matrices, and on the wheat caryopses in particular, are generally carried out by gas chromatography and imply a great deal of costs/time.

The development of a prototype based upon sensor technology is therefore particularly interesting for investigations directly in the storage points of the raw material. In particular, the use of the supramolecular receptors identified above for use in a measurement chamber on quartz crystal microbalances (QCM) would be particularly advantageous in terms of costs and time for determining phosphine in samples of wheat and other cereals.

At the study stage it emerged that the fumigant can be present both as a free gas overhanging the cereals and as a gas adsorbed on the outermost part of the cereal (caryopsis) (B. Berck, J. Agr. Food Chem., 1968, vol. 16, 3, 419-425). Therefore, two parallel investigations have been carried out, one for determining the free phosphine and one for determining the total phosphine.

### Preparation of the analysis method for determining phosphine in wheat

An analysis method capable of producing an overall result that can be fully correlated with conventional gas chromatographic analysis has been developed. To do this various tests have been carried out to free all of the phosphine potentially present and bound to the wheat matrix in gas form.

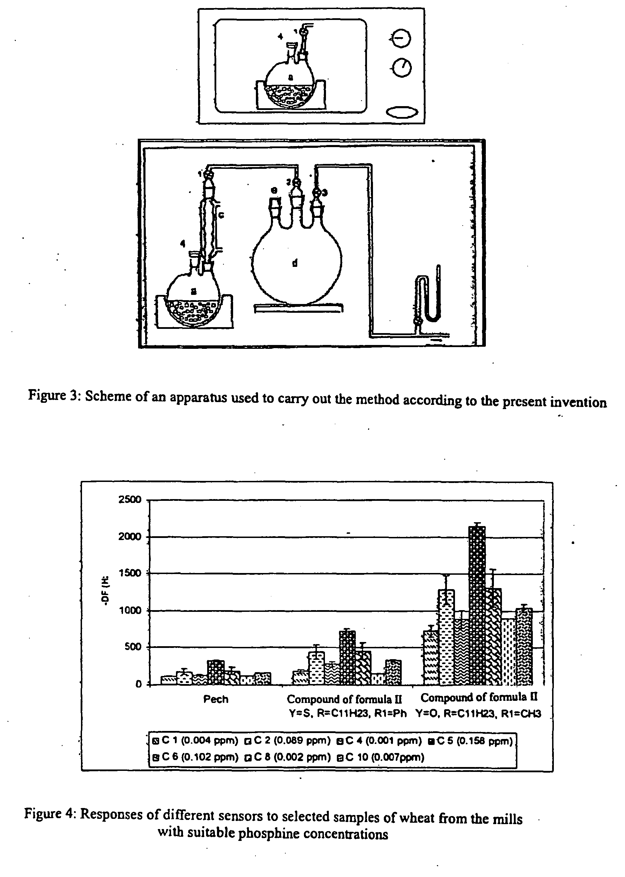

Description of the extraction with microwaves and analysis method (figure 3).

2 flasks, one of 100 ml with 2 necks (a) and one of 500 ml with three necks (d) are taken.

About 10 g of grain are weighed out, are placed in the flask a and 20 ml of 10% H₂SO₄ solution is added. Everything is sealed shut taking care not to place metal cages, but strong plastic cages. The flask is then placed for 1 minute in a microwave oven, at the lowest power [17% of the total power, prudently heating; Microwave Daewoo KOR-63Y5 power 700 W (gentle heating)].

At the same time the flask d is placed in a vacuum, with a pump system with liquid nitrogen trap (0.2 mBar).

When the microwave heating is over, the flask a is quickly equipped with a cooler. The vacuum is applied between the tap 1 and 2 for 30 seconds. The tap 3 is closed and the tap 1 is opened. It is waited for 5 min so that the two flasks balance themselves out. The pressure is taken back to normal values by opening the tap 4 of the flask a. The tap 4 is closed again and another minute is allowed to pass before the instrumental analysis.

The flask d is placed in line with the instrument, i.e. the two taps 2 and 3 are attached to the nitrogen line that acts as a gas carrier for the instrument. When the signal of the quartz crystals is stable one is ready to carry out the measurement.

The samples on which the tests were carried out were provided directly from the mills with the specific requirement of having amounts of high contamination and they were analyzed by an external laboratory with the conventional analysis method (GC-NPD, gas chromatography with Nitrogen Phosphorus Detector). The results obtained with the receptor according to formula (I) in which Y = O and R = C₁₁H₂₃ have shown a good degree of discrimination of the samples capable of matching with gas chromatography analysis (figure 4). ANOVA statistical analysis, carried out on data obtained with such a receptor has highlighted significant differences between the responses obtained with the sample with a high phosphine content (sample 5) compared to all of the other samples (Turkey test, p<0.001). Samples 2 and 6, close to the limit set by the Codex Alimentarius, resulted to be statistically similar, just like samples 1, 4, 8, 10 (Turkey test, p<0.05). On the other hand, a significant difference was noted between the contaminated samples close to the law limit (2 and 6) and those that were hardly contaminated or not at all (1, 4, 8, 10).

It is important that a sensor comprising a cavitand of formula (II) in which Y is equal to O, like for example the aforementioned cavitand with R = C₁₁H₂₃ and R₁ = CH₃, be flanked by a sensor comprising a cavitand of formula (II), in which Y is equal to S, and in particular the one in which R is equal to C₁₁H₂₃ and R₁ = CH₃.

This ensures that the variation in frequency registered is not due to a non-specific interaction with substances other than phosphine. Indeed, the cavitands with Y = S have a low affinity for phosphine, where the cavitands with Y = O have a great affinity for such a substance; consequently, when there is a high variation in frequency detected by the sensor with the cavitand with Y = O and a concomitant low or zero variation in frequency detected by the sensor with the cavitand with Y = S, it can be concluded that the variation observed with the first sensor is due to a specific interaction with phosphine.

If, on the other hand, the variation were also high for the sensor with the cavitand with Y = S, the result obtained for the sensor with cavitand having Y = O would not be reliable, and a non-specific interaction with substances other than phosphine ought to be suspected.

The method for determining phosphine according to the present invention is
- much quicker than the conventional gas chromatography method: about 15 minutes of analysis per sample with the described method versus about 1 h for the conventional method;
- much more efficient: tests on samples of wheat analyzed with GC-NPD after extraction carried out with the microwaves have shown better results than those analyzed after heating with heating jacket (conventional procedure)
- more cost-effective in terms of the instruments.

## Claims

1. Compounds according to the following formula (I) 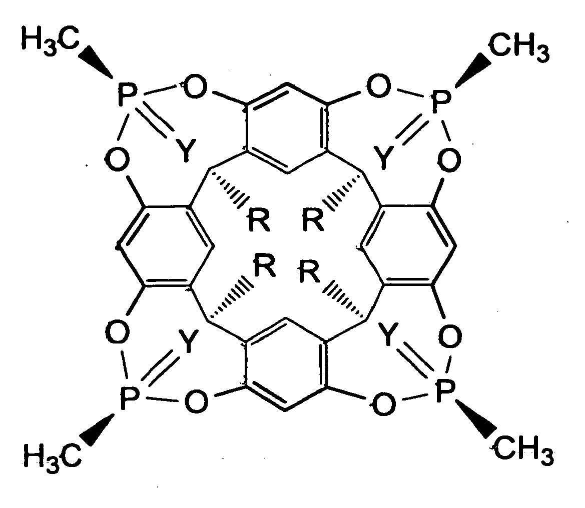
in which Y = O or S
and R = C₄-C₁₈ linear or branched alkyl

2. Compounds according to claim 1, in which R =C₁₁H₂₃.

3. Compounds according to any one of claims 1 and 2, in which Y = O.

4. Mass sensor, comprising a transducer element and a sensitive element, **characterized in that** said sensitive element comprises at least one compound according to any one of the previous claims.

5. Use of a compound of formula (II) 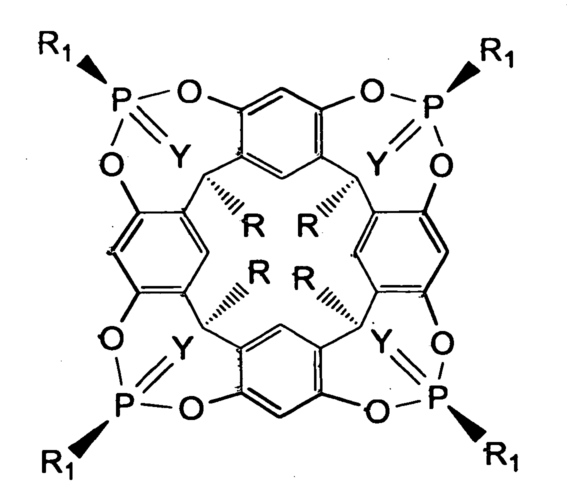 in which Y = O or S; R = C₄-C₁₈ linear or branched alkyl and R₁ = methyl or optionally substituted phenyl, as sensitive material in selective mass sensors for phosphine.

6. Use according to claim 5, in which R = C₁₁-H₂₃ and R₁ = methyl or phenyl.

7. Use according to claim 6, in which Y = O.

8. Method for determining phosphine possibly present in caryopses of cereals, comprising the steps of:
a) adding an aqueous solution of H₂SO₄ with a v/v concentration of between 5 and 20% to a sample of said caryopses of cereals contained in a hermetically sealed container, thus obtaining an aqueous dispersion,
b) subjecting said aqueous dispersion to the action of microwaves for a time no longer than 3 minutes;
c) taking the gaseous phase overhanging said aqueous dispersion into contact with a selective piezoelectric transducer for phosphine, consisting of a quartz crystal microbalance, having at least one mass sensor comprising a quartz disc coated with a layer of a compound as defined in any one of claims 5 to 7 and
d) determining the possibly present phosphine based upon a variation in frequency recorded by the microbalance.

9. Method according to claim 8, in which said quartz crystal microbalance comprises two mass sensors, of which one has a compound according to any one of claims 5 to 7 in which Y = **O** as sensitive material and one has a compound according to any one of claims 5 and 6, in which Y = S, as sensitive material.

10. Method for determining phosphine possibly present as an impurity in gas or gas mixtures, comprising the steps of:
a) taking said gases and gas mixtures into contact with a selective piezoelectric transducer for phosphine, consisting of a quartz crystal microbalance, having at least one mass sensor comprising a quartz disc coated with a layer of a compound according to any one of claims 5 to 7 and
b) determining the possibly present phosphine based upon a variation in frequency recorded by the microbalance.

11. Method according to claim 10, in which said gas is acetylene.

12. Method according to claim 10 or 11, in which said quartz crystal microbalance comprises two mass sensors, of which one has a compound according to any one of claims 5 to 7 in which Y = O as sensitive material and one has a compound according to any one of claims 5 and 6, in which Y = S, as sensitive material.

## Patentansprüche

1. Verbindungen gemäß der folgenden Formel (I) 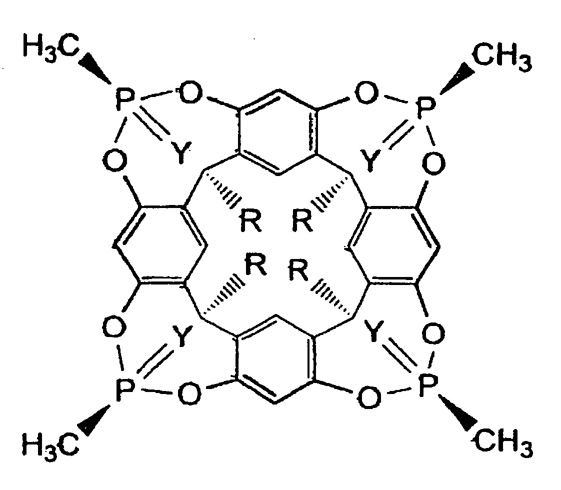
bei denen Y = O oder S
und R eine lineare oder verzweigte C₄-C₁₈-Alkylgruppe ist.

2. Verbindungen nach Anspruch 1, bei denen R = C₁₁H₂₃.

3. Verbindungen nach einem der Ansprüche 1 und 2, bei denen Y = O.

4. Massensensor mit einem Messwandlerelement und einem Erfassungselement, **dadurch gekennzeichnet, dass** das Erfassungselement mindestens eine Verbindung nach einem der vorhergehenden Ansprüche aufweist.

5. Verwendung einer Verbindung der Formel (II) 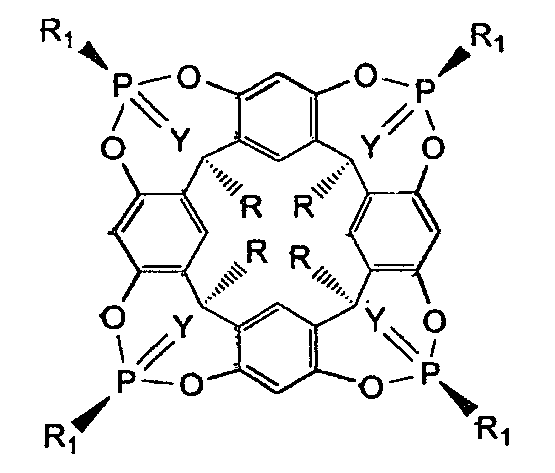 bei der Y = O oder S; R eine lineare oder verzweigte C₄-C₁₈-Alkylgruppe und R₁ eine Methylgruppe oder optional eine substituierte Phenylgruppe ist, als Erfassungsmaterial in selektiven Massensensoren für Phosphin.

6. Verwendung nach Anspruch 5, bei der R = C₁₁-H₂₃ und R₁ = Methyl oder Phenyl.

7. Verwendung nach Anspruch 6, bei der Y = O.

8. Verfahren zur Bestimmung von Phosphin, das möglicherweise in Samenkörnern von Getreidepflanzen vorhanden ist, folgende Schritte umfassend:
a) Zugabe einer wässrigen Lösung von H₂SO₄ mit einer v/v-Konzentration zwischen 5 und 20% zu einem Probegut der Samenkörner von Getreidepflanzen, die in einem dicht verschlossenen Behälter enthalten sind, wodurch eine wässrige Dispersion erhalten wird;
b) Unterziehen der wässrigen Dispersion der Einwirkung von Mikrowellen, für eine Zeitspanne von nicht länger als drei Minuten;
c) die über der wässrigen Dispersion befindliche Gasphase in Kontakt mit einem selektiven piezoelektrischen Messwandlerelement für Phosphin zu bringen, das aus einer Quarzkristall-Mikroanalysenwaage besteht, zumindest einen Massensensor umfassend, der eine Quarzscheibe aufweist, die mit einer Schicht aus einer Verbindung, wie in einem der Ansprüche 5 bis 7 definiert, beschichtet ist; und
d) Bestimmen des möglicherweise vorhandenen Phosphins auf der Grundlage einer durch die Mikroanalysenwaage erfassten Änderung der Frequenz.

9. Verfahren nach Anspruch 8, bei dem die Quarzkristall-Mikroanalysenwaage zwei Massensensoren umfasst, von denen einer eine Verbindung gemäß einem der Ansprüche 5 bis 7 aufweist, bei der als sensitives Material Y = O ist, und einer eine Verbindung gemäß einem der Ansprüche 5 und 6 aufweist, bei der als sensitives Material Y = S ist.

10. Verfahren zur Bestimmung von Phosphin, das möglicherweise als Verunreinigung in Gas oder Gasgemischen vorhanden ist, folgende Schritte umfassend:
a) die Gase und Gasgemische in Kontakt mit einem selektiven piezoelektrischen Messwandlerelement für Phosphin zu bringen, das aus einer Quarzkristall-Mikroanalysenwaage besteht, mit mindestens einem Massensensor, der eine Quarzscheibe umfasst, die mit einer Schicht aus einer Verbindung nach einem der Ansprüche 5 bis 7 beschichtet ist, und
b) Bestimmen des möglicherweise vorhandenen Phosphins auf der Grundlage einer durch die Mikroanalysenwaage erfassten Änderung der Frequenz.

11. Verfahren nach Anspruch 10, bei dem das Gas Acetylen ist.

12. Verfahren nach Anspruch 10 oder 11, bei dem die Quarzkristall-Mikroanalysenwaage zwei Massensensoren umfasst, von denen einer eine Verbindung gemäß einem der Ansprüche 5 bis 7 aufweist, bei der als sensitives Material Y = O ist, und einer eine Verbindung gemäß einem der Ansprüche 5 und 6 aufweist, bei der als sensitives Material Y = S ist.

## Revendications

1. Composés répondant à la formule suivante (I) 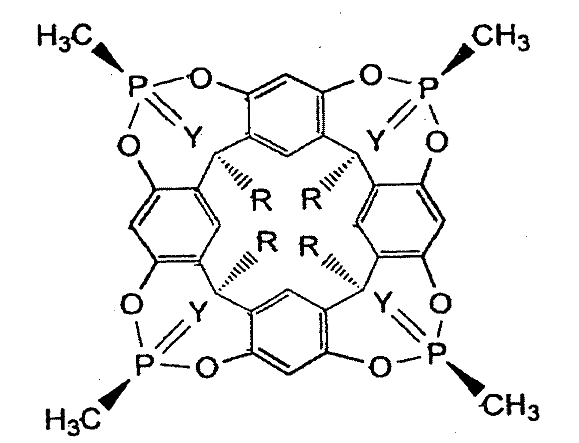
dans laquelle Y représente un atome de O ou de S
et R représente un alkyle linéaire ou ramifié en C₄ à C₁₈.

2. Composés selon la revendication 1, dans lesquels R représente un groupe C₁₁H₂₃.

3. Composés selon l'une quelconque des revendications 1 et 2, dans lesquels Y représente un atome de O.

4. Détecteur de masse, comprenant un élément transducteur et un élément sensible, **caractérisé en ce que** ledit élément sensible comprend au moins un composé selon l'une quelconque des revendications précédentes.

5. Utilisation d'un composé répondant à la formule (II) 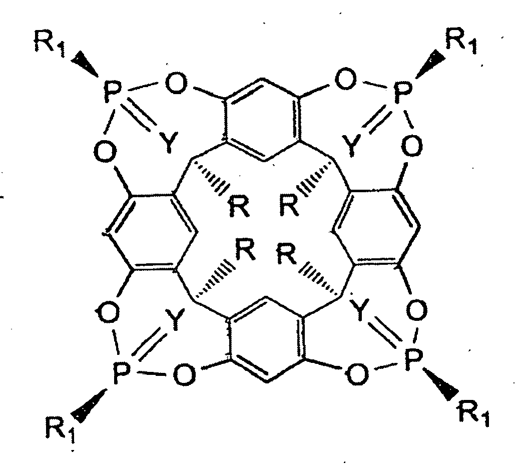 dans laquelle Y représente un atome de O ou de S ; R représente un alkyle linéaire ou ramifié en C₄ à C₁₈ et R₁ représente un méthyle ou un phényle facultativement substitué, en tant que matériau sensible dans des détecteurs de masse sélectifs vis-à-vis de la phosphine.

6. Utilisation selon la revendication 5, dans laquelle R représente un groupe C₁₁-H₂₃ et R₁ représente un méthyle ou un phényle.

7. Utilisation selon la revendication 6, dans laquelle Y représente un atome de O.

8. Procédé de détection de phosphine éventuellement présente dans des caryopses de céréales, comprenant les étapes consistant à :
a) ajouter une solution aqueuse de H₂SO₄ ayant une concentration v/v comprise entre 5 et 20 % à un échantillon desdits caryopses de céréales contenus dans un récipient fermé hermétiquement, ce qui donne une dispersion aqueuse,
b) soumettre ladite dispersion aqueuse à l'action de micro-ondes pendant une durée ne dépassant pas 3 minutes ;
c) mettre la phase gazeuse située au-dessus de ladite dispersion aqueuse en contact avec un transducteur piézoélectrique sélectif vis-à-vis de la phosphine, consistant en une microbalance à cristal de quartz, ayant au moins un détecteur de masse comprenant un disque de quartz revêtu d'une couche d'un composé selon l'une quelconque des revendications 5 à 7 et
d) détecter la phosphine éventuellement présente en se basant sur une variation de fréquence enregistrée par la microbalance.

9. Procédé selon la revendication 8, dans lequel ladite microbalance à cristal de quartz comprend deux détecteurs de masse, l'un d'eux possédant un composé selon l'une quelconque des revendications 5 à 7 dans lequel Y représente un atome de O en tant que matériau sensible, l'autre possédant un composé selon l'une quelconque des revendications 5 et 6, dans lequel Y représente un atome de S, en tant que matériau sensible.

10. Procédé de détection de phosphine éventuellement présente en tant qu'impureté dans un gaz ou des mélanges gazeux, comprenant les étapes consistant à :
a) mettre lesdits gaz et mélanges gazeux en contact avec un transducteur piézoélectrique sélectif vis-à-vis de la phosphine, consistant en une microbalance à cristal de quartz, ayant au moins un détecteur de masse comprenant un disque de quartz revêtu d'une couche d'un composé selon l'une quelconque des revendications 5 à 7 et
b) détecter la phosphine éventuellement présente en se basant sur une variation de fréquence enregistrée par la microbalance.

11. Procédé selon la revendication 10, dans lequel ledit gaz est de l'acétylène.

12. Procédé selon la revendication 10 ou 11, dans lequel ladite microbalance à cristal de quartz comprend deux détecteurs de masse, l'un d'eux possédant un composé selon l'une quelconque des revendications 5 à 7 dans lequel Y représente un atome de O en tant que matériau sensible, l'autre possédant un composé selon l'une quelconque des revendications 5 et 6, dans lequel Y représente un atome de S, en tant que matériau sensible.
